# EUROPEAN PATENT SPECIFICATION

(11) **EP 0 543 071 B1**
(45) Date of publication and mention of the grant of the patent: **23.07.1997**
(21) Application number: 91830508.7
(22) Date of filing: 21.11.1991
(51) Int. Cl.: F03B 15/02

(54) **A distributor for a reaction water turbine**
Leitapparat für hydraulische Reaktionsturbinen
Distributeur pour turbine hydraulique à réaction

(43) Date of publication of application: 26.05.1993
(73) Proprietor: ENTE NAZIONALE PER L'ENERGIA ELETTRICA - (ENEL), I-00198 Roma (IT)
(72) Inventor: Fanelli, Michele, 201620 Milano (IT)
(74) Representative: Ferraiolo, Ruggero

(56) References cited:
- CH-A- 328 557
- FR-A- 559 928
- FR-A- 2 167 179

## Description

This present invention refers to a distributor for a reaction water turbine, particularly for a Francis turbine and a water machine as a reversible pump-turbine, both being provided with governing means.

For an easy turn of speech reference will be made to Francis turbine only in the following specification.

According to the prior art, the conventional Francis turbine distributor comprises nozzle stationary blades as a predistributor and, downstream said blades, a mobile blade ring as the real distributor, generally known as "nozzle ring", by which the water flow rate to the runner is governed. The pins in the single blades are connected with the ring through crank mechanisms; a controlled servomotor rotates the ring and the latter rotates tha single blades. Alternatively, a pin for each blade is controlled by its own servomotor and the group of servomotor is in turn interlocked in order to make the blades synchronized all together.

Drawbacks in the conventional turbine distributors are: a) a mechanical complication in the assembly of blades-ring-crank mechanisms and possible servomotors, b) an adverse incidence of the water flow on the runner blades with the opening of the distributor blades being different from the nominal one, c) a circulation movement in the water flow that comes out of the runner baldes with the water flow rates being different from the nominal flow rate, which circulation movement causes in the turbine diffuser the phenomenon well known as "vortex rope" that, finally, causes pressure and power pulsations. These pulsations may be amplified by the dynamic performances of the turbine and, in general, of the hydraulic plant and may jeopardize the correct operation of the turbine under certain load ranges.

According to the above referenced prior art, said drawback specified under c) is empirically obviated by different means as, for instance, by introducing a certain air flow downstream the runner or placing bodies of certain shapes into the the diffuser so as to break said circulation movement, but these provisions, being of empirical nature, have low efficiency and present structural complication and high costs for installing compressors and/or adjustment valves for the air flow downstream the runner as well as rapid wear of said bodies of certain shapes due to the cavitation or fatigue caused by vibrations.

To overcome or reduce these above drawbacks, distributors were conceived as disclosed in the documents FR-A-559 928 and CH-A-328 557 which show valve means in the form of a cilindrical ring or shutter located aside the stationary blades and controlled in order to move from a first retracted position whereby the passage for the water is open and a second extended position whereby said passage is completely closed. Of course, this distributors entail more plan averall dimensions than in the prior art distributors.

The distributor according to this invention provides for valve means located within the turbine predistributor, the valve means comprising so many sections as there are stationary blades in the distributor, each of said sections being positioned between two adjacent stationary blades and having its width and length such to slide between said stationary blades between said retracted and extended positions.

The advantage of this invention is to afford a reduced plan overall turbine dimensions.

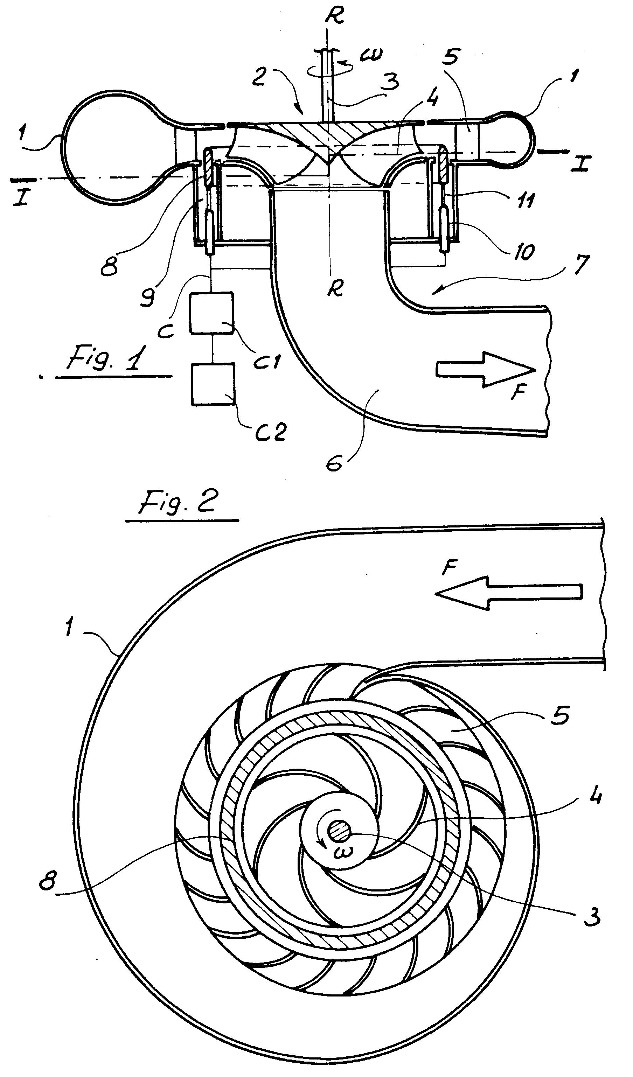

The invention is explained in detail herebelow with reference to the accompanying drawings the first of which, Figg. 1 and 2, show a distributor featured substantially in accordance with the prior art cited in the above two documents.
Fig. 1 is a vertical axial cross section according to the prior art,
Fig. 2 is a plan section view according to I-I of Fig. 1,
Fig. 3 is a part vertical axial cross section according to the invention,
Fig. 4 ia a part plan section view according to II-II of Fig. 3 and
Fig. 5 is a vertical cross section of a detail.

Figg. 1 and 2 show the scroll 1 of a vertical axis R-R Francis turbine, the runner 2 and its shaft 3 rotating according to arrow ω, the runner blades 4, the stationary blade predistributor 5, the diffuser 6 with its elbow 7. Arrows F show the direction of the water flow. Between the predistributor 5 and runner 2 an annular cylindrical valve 8, concentric with the runner, is visible in a middling position between the completely retracted position in a lower chamber 9 and the completely extended top position whereby the passage between the predistributor 5 and runner 2 is completely closed. A set of hydraulic jacks 10 is located within said lower chamber 9 in order to move the valve 8 up and down through rods 11. The fluid supply in the hydraulic jacks 10, through ducts and electrovalves indicated by C briefly, is controlled by a conventional control means C1 which in turn is associated with and controlled by a water rate governor C2.

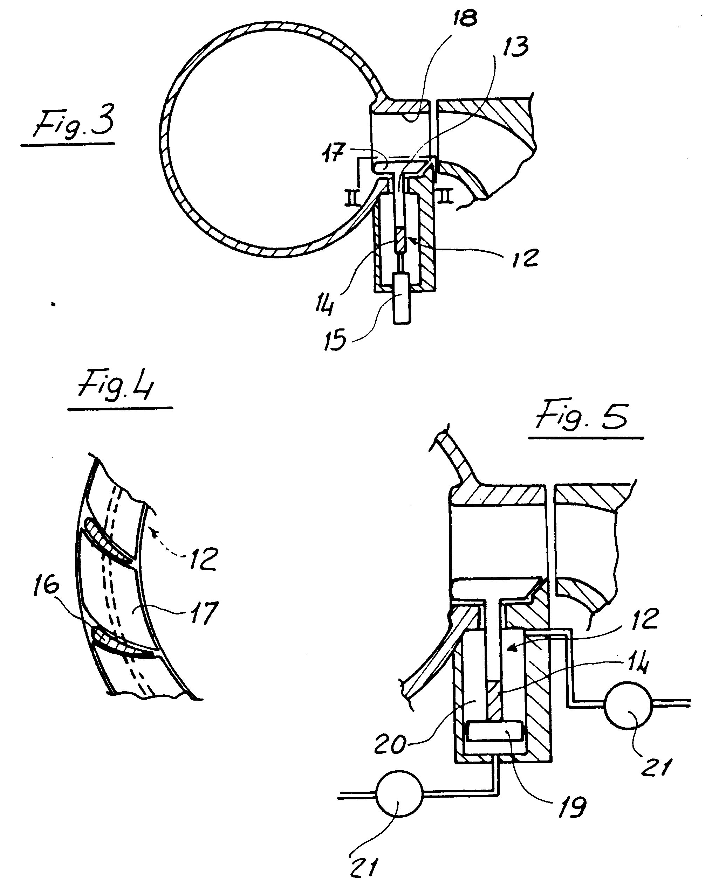

FIGG. 3, 4 show a circular valve 12 which comprises a plurality of upper sections 13 having the first end , the lower one, fixed to an annular continuous lower part 14 which is in turn associated with a set of hydraulic jacks 15 that move the valve between a retracted and an extended position to the above mentioned purpose. Each of said sections 13 has such a width as to seal slide between two adjacent blades 16 in the predistributor and has such a height that it may totally close the water passage between said blades 16 once said valve is in the extended position. Moreover, the second end 17 , the upper one, in each section 13 has substantially the same width as the wall 18 in the passage defined by blades 16 in order to cause a water flow as uniform as possible with the valve being totally or partly in the retracted position. It will be realized that this embodiment entails a reduced span between the predistributor and the runner axis R-R and, consequently, reduced plan averall dimensions (see Fig. 1).

FIG. 5 shows an alternative embodiment wherein the motor means that moves valve 12 is composed by a plurality of cylindrical chambers 20 (the figure shows one chamber only) coveniently spaced, each chamber being adapted to receive a piston 19 which is associated with the lower end of the annular continuous part 14 in the valve 12. In each chamber 20 a fluid from a source, not shown, may be pumped under control through a conventional assembly of ducts and electrovalves, briefly indicated by 21, to impart to valve 12 the required up and down movements.

## Claims

1. Distributor for a reaction hydraulic turbine wherein valve means (12) are located within the turbine predistributor (5) and are associated with motor means (10,C1) to move between a first retracted position whereby the passage for the water from said predistributor and runner is open and a second extended position whereby said passage is completely closed so as continuously govern the water flow rate directed to the turbine runner **characterized** in that said valve means (12) comprise so many sections (13) as stationery blades (16) are in said predistributor (5), each of said sections being positioned between two adjacent stationary blades (16) and having its width and length such to slide between said stationary blades (16) between said retracted position and extended position.

2. Distributor according to claim 1 characterized in that a first end of said sections (13) is fixed to an annular continuous part (14) in said valve (12) and that said annular continuous part (14) is associated with said motor means (10).

3. Distributor according to claims 1 and 2 characterized in that the extension of a second end (17) of said sections (13) equals the extension of the passage (18) defined by the turbine predistributor.

4. Distributor according to any of the preceding claims characterized in that said motor means (10) is controlled from a control means (C1) which in turn is associated with and controlled from a water rate governor (C2).

5. Distributor according to any of the preceding claims characterized in that said motor means (10) is at least a hydraulic jack (10, 15) associated with said valve (8, 12).

6. Distributor according to claim 4 characterized in that said motor means (10) comprises a plurality of hydraulic jacks each being defined by a chamber (20) wherein a piston (19) is slidable and associated with an end of the annular continuous part (14) in said valve (8, 12).

## Patentansprüche

1. Verteiler für eine hydraulische Reaktionsturbine, bei der eine Absperreinrichtung (12) in dem Vorverteiler (5) der Turbine angeordnet und mittels zugeordneter Antriebseinrichtungen (10, C1) bewegbar ist zwischen einer ersten, zurückgezogenen Position, in der der Wasserdurchtritt vom Vorverteiler zum Läufer offen ist, und einer zweiten, ausgefahrenen Position, in der der Durchtritt vollständig geschlossen ist, um auf diese Weise die zum Turbinenläufer gerichtete Wasserströmungsmenge kontinuierlich zu steuern, dadurch **gekennzeichnet,** daß die Absperreinrichtung (12) ebensoviele Sektionen (13) aufweist, als feststehende Schaufeln (60) in dem Vorverteiler (5) vorgesehen sind, wobei jede Sektion zwischen zwei benachbarten feststehenden Schaufeln (16) angeordnet ist und eine solche Breite und Länge hat, daß sie zwischen den feststehenden Schaufeln (16), zwischen der zurückgezogenen und ausgefahrenen Position verschiebbar ist.

2. Verteiler nach Anspruch 1,
dadurch **gekennzeichnet,** daß ein erstes Ende der Sektionen (13) an einem ringförmig durchgehenden Teil (16) der Absperreinrichtung (12) befestigt ist und daß der ringförmig durchgehende Teil (14) mit der Antriebseinrichtung (10) verbunden ist.

3. Verteiler nach Anspruch 1 und 2,
dadurch **gekennzeichnet,** daß die Länge eines zweiten Endes (17) der Sektionen (13) gleich der Länge des von dem Vorverteiler der Turbine begrenzten Durchlasses (18) ist.

4. Verteiler nach einem der vorangehenden Ansprüche,
dadurch **gekennzeichnet,** daß die Antriebseinrichtung (10) durch eine Steuereinrichtung (C1) gesteuert ist, die ihrerseits einem Wasserströmungsregler (C2) zugeordnet und von diesem gesteuert ist.

5. Verteiler nach einem der vorangehenden Ansprüche,
dadurch **gekennzeichnet,** daß die Antriebseinrichtung (10) mindestens ein Hydraulikzylinder (10, 15) ist, der der Absperreinrichtung (8, 12) zugeordnet ist.

6. Verteiler nach Anspruch 4,
dadurch **gekennzeichnet,** daß die Antriebseinrichtung (10) eine Vielzahl von Hydraulikzylindern aufweist, von denen jeder eine Kammer (20) aufweist, in der ein Kolben (19) verschiebbar ist, der mit einem Ende des ringförmig durchgehenden Teils (16) der Absperreinrichtung (8, 12) verbunden ist.

## Revendications

1. Distributeur pour turbine hydraulique à réaction dans laquelle des moyens de soupapes (12) sont placés à l'intérieur du prédistributeur de turbine (5) et sont associés à des moyens moteurs (10, C1) pour se déplacer entre une première position rétractée dans laquelle le passage de l'eau provenant du prédistributeur et de la couronne mobile est ouvert, et une seconde position sortie dans laquelle ce passage est complètement fermé, de manière à commander de façon continue le débit d'eau dirigé vers la couronne mobile,
caractérisé en ce que
les moyens de soupapes (12) comprennent autant de sections (13) qu'il y a d'aubes (16) dans le prédistributeur (5), chacune de ces sections étant positionnée entre deux aubes fixes adjacentes (16) et présentant une largeur et une longueur lui permettant de glisser entre les aubes fixes (16) pour se déplacer entre la position rétractée et la position sortie.

2. Distributeur selon la revendication 1,
caractérisé en ce que
une première extrémité des sections (13) est fixée à une partie continue annulaire (14) de la soupape (12), et en ce que la partie continue annulaire (14) est associée aux moyens moteurs (10).

3. Distributeur selon les revendications 1 et 2,
caractérisé en ce que
l'extension d'une seconde extrémité (17) des sections (13) est égale à l'extension du passage (18) défini par le prédistributeur de turbine.

4. Distributeur selon l'une quelconque des revendications précédentes,
caractérisé en ce que
les moyens moteurs (10) sont commandés par un dispositif de commande (C1) qui est à son tour associé et commandé par un régulateur de débit d'eau (C2).

5. Distributeur selon l'une quelconque des revendications précédentes,
caractérisé en ce que
les moyens moteurs (10) sont constitués par au moins un vérin hydraulique (10, 15) associé à la soupape (8, 12).

6. Distributeur selon la revendication 4,
caractérisé en ce que
les moyens moteurs (10) comprennent un certain nombre de vérins hydrauliques définis chacun par une chambre (20) à l'intérieur de laquelle un piston (19) peut glisser et être associé à une extrémité de la partie continue annulaire (14) de la soupape (8, 12).
